# EUROPEAN PATENT APPLICATION

(11) **EP 4 467 607 A1**
(43) Date of publication of application: **27.11.2024**
(21) Application number: 22922185.8
(22) Date of filing: 21.12.2022
(51) Int. Cl.: C08L 27/12, C08K 3/013, C08K 3/22, C08K 3/34, H01R 4/70, H01R 4/72, H01R 43/00, H02G 15/10

(54) **HEAT SHRINKABLE CONNECTION COMPONENT AND METHOD FOR PRODUCING HEAT SHRINKABLE CONNECTION COMPONENT**

(30) Priority: 21.01.2022 JP 2022008307
(71) Applicant: Sumitomo Electric Fine Polymer, Inc., Sennan-gun, Osaka 590-0458 (JP); SUMITOMO ELECTRIC INDUSTRIES, LTD., Osaka-shi, Osaka 541-0041 (JP)
(72) Inventor: ISHIBASHI Keiji, Sennan-gun, Osaka 590-0458 (JP); MURATA Seiichirou, Sennan-gun, Osaka 590-0458 (JP); FUKUMOTO Ryota, Osaka-shi, Osaka 541-0041 (JP)
(74) Representative: Boult Wade Tennant LLP
(86) International application number: PCT/JP2022/047205
(87) International publication number: WO 2023/140035

(57) **Abstract**

A heat shrinkable connection component according to one embodiment of the present disclosure is used for the purpose of connecting an insulated wire that is obtained by covering a conductor with an insulating layer. This heat shrinkable connection component is provided with a heat shrinkable tube that has a melting point of 210°C to 250°C and a pair of sealing parts that are arranged on the inner circumferential surfaces of both end parts of the heat shrinkable tube; and the sealing material of the sealing parts has a shear viscosity of 1,000 Pa·s to 2,000 Pa·s at a shear rate of 100/s at 250°C, and a shear viscosity of 7,000 Pa·s to 70,000 Pa·s at a shear rate of 0.01/s at 215°C.

## Description

### TECHNICAL FIELD

The present disclosure relates to a heat shrinkable connecting component and a method of manufacturing a heat shrinkable connecting component. This application claims priority based on Japanese Patent Application No. 2022-8307 filed on January 21, 2022, and the entire contents of the Japanese patent application are incorporated herein by reference.

### BACKGROUND ART

As a wire harness for aircraft, electronic components, railway vehicles, automobiles, and motorcycles, an electrical wire bundle in which a plurality of insulated electrical wires are bundled with a connecting band, an adhesive tape, or the like is used. Each insulated electrical wire is generally consists of a conductor bundle made of one or more conductors such as copper alloys covered with an insulator. A connection portion (joint portion) at the end or intermediate portion of the electrical wire bundle requires electrical insulation, mechanical protection, and waterproofing because the conductor is exposed. Heat shrinkable tubes are used for electrical insulation, mechanical protection and waterproofing. In particular, for waterproofing, a heat shrinkable connecting component including a heat shrinkable tube having heat shrinkability in a radial direction is used. When the heat shrinkable tube included in the heat shrinkable connecting component is heated while covering the connection portion between the insulated electrical wires, the heat shrinkable tube shrinks and adheres closely to the shape of the connection portion due to the shape memory effect, and thus the connection portion of the electrical wire, the pipe, or the like can be protected.

In order to obtain sufficient water stopping performance between element wires, as a conventional technique, for example, a waterproof structure of a wire terminal has been proposed in which a cyano-based adhesive is impregnated into a gap between core wires of a terminal of the electrical wire and solidified to bond the core wires, a heat shrinkable tube having a hot melt layer (adhesive layer) on an inner surface thereof is covered on the terminal, and the hot melt layer is melted and solidified to fill the gap (see Patent Literature 1).

### CITATION LIST

### PATENT LITERATURE

Patent literature 1: Japanese Unexamined Patent Application Publication No. H11-233175

### SUMMARY OF THE INVENTION

A heat shrinkable connecting component of the present disclosure, is a heat shrinkable connecting component for connection of an insulated electrical wire including a conductor covered by an insulating layer. The heat shrinkable connecting component includes a heat shrinkable tube having a melting point of 210°C to 250°C, and a pair of sealing portions disposed at inner peripheral surfaces of the heat shrinkable tube at two end portions of the heat shrinkable tube. A sealing material of each of the sealing portions has shear viscosity of 1000 Pa s to 2000 Pa s at 250°C with a shear rate of 100/s and has shear viscosity of 7000 Pa s to 70000 Pa s at 215°C with a shear rate of 0.01/s.

A method of manufacturing a heat shrinkable connecting component of the present disclosure is a method of manufacturing a heat shrinkable connecting component. The method includes disposing a pair of sealing portions at inner peripheral surfaces of a heat shrinkable tube at two end portions of the heat shrinkable tube. The disposing the sealing portions includes shrinking the heat shrinkable tube and fixing the sealing portions in place. The heat shrinkable tube has a melting point of 210°C to 250°C. A sealing material of each of the sealing portions has shear viscosity of 1000 Pa s to 2000 Pa s at 250°C with a shear rate of 100/s and has shear viscosity of 7000 Pa s to 70000 Pa s at 215°C with a shear rate of 0.01/s.

### BRIEF DESCRIPTION OF THE DRAWINGS

FIG. 1 is a schematic perspective view of a heat shrinkable connecting component according to an embodiment of the present disclosure.
FIG. 2 is a schematic perspective view of a heat shrinkable connecting component according to another embodiment of the present disclosure.
FIG. 3 is a schematic perspective view of a heat shrinkable connecting component according to another embodiment of the present disclosure.
FIG. 4 is a schematic perspective view of a heat shrinkable connecting component according to another embodiment of the present disclosure.
FIG. 5 is a schematic perspective view of a heat shrinkable connecting component according to another embodiment of the present disclosure.
FIG. 6 is a schematic view illustrating a state before conductors exposed from two insulated electrical wires are inserted into a heat shrinkable connecting component according to an embodiment of the present disclosure.
FIG. 7 is a schematic view illustrating a state in which a connection portion of two insulated electrical wires is covered by a heat shrinkable connecting component according to an embodiment of the present disclosure.
FIG. 8 is a schematic view illustrating a state where a heat shrinkable connecting component according to an embodiment of the present disclosure starts to shrink when heated.
FIG. 9 is a schematic view illustrating a state where a sealant of a heat shrinkable connecting component according to an embodiment of the present disclosure is melted.
FIG. 10 is a schematic perspective view of a bundle of electrical wires connected by a heat shrinkable connecting component according to an embodiment of the present disclosure.

### DETAILED DESCRIPTION

### [Problems to be Solved by Present Disclosure]

For a connecting component of insulated electrical wires, not only protection of a connecting portion of the insulated electrical wires but also prevention of water intrusion from the outside into the connecting portion and high sealing property so as to maintain insulation are required.

The present disclosure has been made in view of the above circumstances, and an object of the present disclosure is to provide a heat shrinkable connecting component which is excellent in sealing ability and durability under a high temperature environment as a connecting component for insulated electrical wires.

### [Advantageous Effects of Present Disclosure]

According to the present disclosure, a heat shrinkable connecting component having excellent sealing ability and durability under a high temperature environment can be provided as a connecting component for insulated electrical wires.

### [Description of Embodiments of Present Disclosure]

First, embodiments of the present disclosure will be listed and described.
(1) A heat shrinkable connecting component according to an aspect of the present disclosure includes a heat shrinkable connecting component for connection of an insulated electrical wire including a conductor covered by an insulating layer. The heat shrinkable connecting component includes a heat shrinkable tube having a melting point of 210°C to 250°C, and a pair of sealing portions disposed at inner peripheral surfaces of the heat shrinkable tube at two end portions of the heat shrinkable tube. A sealing material of each of the sealing portions has shear viscosity of 1000 Pa s to 2000 Pa s at 250°C with a shear rate of 100/s and has shear viscosity of 7000 Pa s to 70000 Pa·s at 215°C with a shear rate of 0.01/s.
   The heat shrinkable connecting component contains a heat shrinkable tube having a melting point of 210°C to 250°C, and the sealing material in the sealing portion has shear viscosity of 1000 Pa s to 2000 Pa s at 250°C with a shear rate of 100/s, whereby a gap is less likely to be formed when the heat shrinkable tube shrinks, and the heat shrinkable connecting component has excellent sealing accuracy. In addition, when the shear viscosity of the sealing material at 215°C with a shear rate of 0.01/s is 7000 Pa s to 70000 Pa·s, dripping during use in a high temperature environment is suppressed, and the durability of the sealing ability is excellent. Thus, sealing ability and durability under a high temperature environment is excellent as the connecting component for insulated electrical wires. Furthermore, the heat shrinkable tube has a melting point of 210°C to 250°C, and thus can ensure heat resistance and suppress damage to a covered object due to heat. As for the measurement method of the shear viscosity, the shear viscosity can be measured by a rotational rheometer ("MCR302" manufactured by Anton Paar GmbH) at a predetermined temperature and shear rate. The "two end portions of the heat shrinkable tube" refer to a range of 1/3 or less of the length of the heat shrinkable tube in the longitudinal direction from each end of the heat shrinkable tube in the longitudinal direction.
(2) In the above (1), a main component of the heat shrinkable tube may be an ethylene-tetrafluoroethylene copolymer. The heat shrinkable tube may have a storage modulus of 0.8 MPa to 2.8 MPa at 250°C to 280°C. When the main component of the heat shrinkable tube is an ethylene-tetrafluoroethylene copolymer, the melting point of the heat shrinkable tube is easily controlled. In addition, when the storage modulus at 250°C to 280°C is 0.8 MPa to 2.8 MPa, the deformability when heated to a melting point or higher is excellent, an expansion (diameter expansion) in the production process can be easily performed, and an uneven thickness ratio (thickness distribution) can be controlled to a good range. Further, the uneven thickness ratio (thickness distribution) and the length change rate during shrinkage can be controlled within a good range, and the shrinkage performance of shrinking to the original shape is excellent.
   The "main component" in the heat shrinkable tube means a component having the highest content, and refers to a component contained in an amount of 95% by mass or more based on the total mass of the heat shrinkable tube and contained in an amount of 98% by mass or more based on the total mass of the resin component. The "storage modulus" is a value measured in accordance with the test method of dynamic mechanical properties described in JIS-K7244-4 (1999), and is a value measured using a viscoelasticity measuring apparatus under the conditions of a tensile mode and a strain of 0.08% at the above-mentioned temperatures and frequencies. As the viscoelasticity measuring apparatus, for example, "DVA-220" manufactured by IT Measurement Control Co., Ltd. can be used.
(3) In the above (1) or (2), the sealing material may have a softening point of 90°C to 170°C. When the softening point of the sealing material is 90°C to 170°C, the sealing material has moderate fluidity and the effect of filling the gap is enhanced, and thus the sealing property of the heat shrinkable connecting component can be improved.
(4) In any one of (1) to (3), a main component of the sealing material may be a tetrafluoroethylene-hexafluoropropylene-vinylidenefluoride copolymer. By using tetrafluoroethylene-hexafluoropropylene-vinylidenefluoride copolymer having a relatively low melting point as the main component of the sealing material, sealing can be performed at a lower temperature.
(5) In any one of (1) to (4), the sealing material may contain an inorganic filler. The inorganic filler may be silica, hydrotalcite, clay, or a combination thereof. A content of the inorganic filler may be 1.0 part by mass to 4.0 parts by mass with respect to 100 parts by mass of a resin in the sealing material. The sealing material contains the inorganic filler, and thus the shear viscosity of the sealing material can be easily adjusted. When the inorganic filler is silica, hydrotalcite, clay, or a combination thereof, the inorganic filler has excellent heat resistance. When the content of the inorganic filler is 1.0 parts by mass to 4.0 parts by mass with respect to 100 parts by mass of the resin in the sealing material, the shear viscosity of the sealing material at high temperatures of 250°C and 215°C can be adjusted to a good range, and thus the sealing property of the heat shrinkable connecting component can be further improved.
(6) In any one of (1) to (5), transmittance of infrared light having a wavelength of 1 µm in the sealing material may be 1.0% to 30.0%. When the transmittance of infrared light having a wavelength of 1 µm in the sealing material is within the above range, the infrared light absorptivity of the heat shrinkable connecting component in infrared light heating can be improved, and good heat shrinkage behavior of the heat shrinkable connecting component can be obtained. The measurement method of transmittance of infrared light having a wavelength of 1 µm can be measured by using a spectrophotometer UV-3600 manufactured by Shimadzu Corporation.
(7) In any one of (1) to (6), the heat shrinkable tube may further include a connection portion disposed at an inner peripheral surface of the heat shrinkable tube between the pair of sealing portions. A solder material of the connection portion may have a melting point of 210°C to 240°C. When the heat shrinkable tube further include a connection portion disposed on the inner peripheral surface between the pair of sealing portions, and the melting point of the solder material in the connection portion is in the above range, the heat shrinkable connecting component can have good connection of the insulated electrical wires.
(8) In any one of (1) to (7), arithmetic average roughness Ra of a surface of the heat shrinkable tube may be 0.10 µm to 2.00 µm. When the arithmetic average roughness Ra is 0.10 µm to 2.00 µm, the visibility of the inside of a heat shrinkable tube 1 can be secured, and the infrared light (IR) absorptivity in infrared light heating during the manufacturing step of heat shrinkable tube 1 can be improved. The "arithmetic average roughness Ra" means a value measured in accordance with JIS-B0601:2001 with a cut-off value (λc) of 2.5 mm and an evaluation length (l) of 8 mm.
(9) A method of manufacturing a heat shrinkable connecting component according to another aspect of the present disclosure includes disposing a pair of sealing portions at inner peripheral surfaces of a heat shrinkable tube at two end portions of the heat shrinkable tube. The disposing the sealing portions includes shrinking the heat shrinkable tube and fixing the sealing portions in place. The heat shrinkable tube has a melting point of 210°C to 250°C. A sealing material of each of the sealing portions has shear viscosity of 1000 Pa s to 2000 Pa s at 250°C with a shear rate of 100/s and has shear viscosity of 7000 Pa s to 70000 Pa s at 215°C with a shear rate of 0.01/s.
   In the method of manufacturing the heat shrinkable connecting component, by using the heat shrinkable tube having a melting point of 210°C to 250°C, heat resistance can be secured and damage to the covered object due to heat can be suppressed. When the shear viscosity of the sealing material at 250°C and a shear rate of 100/s is 1000 Pa s to 2000 Pa·s, a gap is less likely to be formed when the heat shrinkable tube shrinks, and the heat shrinkable connecting component having excellent sealing accuracy can be produced. In addition, since the shear viscosity of the sealing material at 215°C and a shear rate of 0.01/s is 7000 Pa·s to 70000 Pa s, it is possible to produce a heat shrinkable connecting component which suppresses dripping during use in a high temperature environment and has excellent durability of sealing ability. Thus, according to the method of manufacturing a heat shrinkable connecting component, a heat shrinkable connecting component having excellent sealing ability and durability under a high temperature environment can be manufactured.
(10) In the above (9), the sealing material may have a softening point of 90°C to 170°C. When the softening point of the sealing material is 90°C to 170°C, the sealing material has moderate fluidity and the effect of filling the gap is enhanced, and thus a heat shrinkable connecting component having better sealing properties can be produced.

### [Details of Embodiments of Present Disclosure]

Hereinafter, a heat shrinkable connecting component and a method of manufacturing a heat shrinkable connecting component according to embodiments of the present disclosure will be described in detail with reference to the drawings as appropriate.

### <Heat Shrinkable Connecting Member>

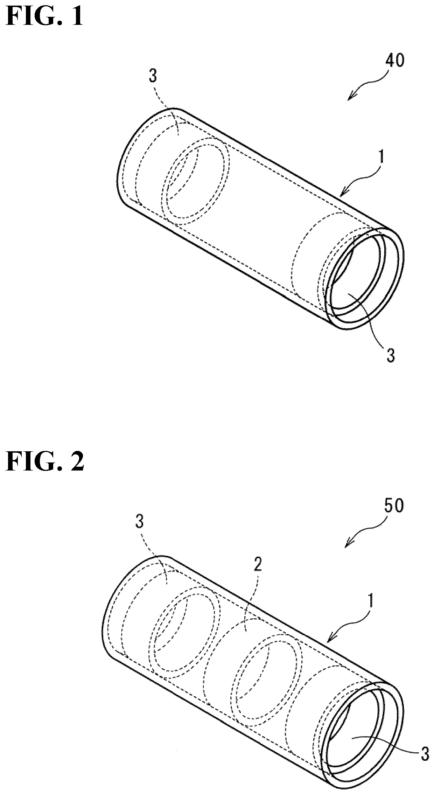

The heat shrinkable connecting component is a heat shrinkable connecting component for connecting insulated electrical wire in which a conductor is covered by an insulating layer. FIG. 1 is a schematic perspective view of a heat shrinkable connecting component according to an embodiment of the present disclosure. As shown in FIG. 1, a heat shrinkable connecting component 40 includes a heat shrinkable tube 1 and a pair of sealing portions 3 disposed on the inner peripheral surface of two end portions of heat shrinkable tube 1. Sealing portion 3 is made of a sealing material.

The heat shrinkable connecting component may further include a connection portion disposed on an inner peripheral surface of the heat shrinkable tube between the pair of sealing portions. The heat shrinkable connecting component further includes a connection portion disposed on the inner peripheral surface between the pair of sealing portions of the heat shrinkable tube, thereby further improving the connectivity between insulated electrical wires. A heat shrinkable connecting component 50 shown in FIG. 2 includes heat shrinkable tube 1, the pair of sealing portions 3 disposed on the inner peripheral surface of two end portions of heat shrinkable tube 1, and a connection portion 2 disposed on the inner peripheral surface between the pair of sealing portions 3 of heat shrinkable tube 1. Heat shrinkable connecting component 50 has a configuration similar to that of heat shrinkable connecting component 40 except for connection portion 2. Hereinafter, heat shrinkable connecting component 50 will be described in detail.

### [Heat Shrinkable Tube]

Heat shrinkable tube 1 is used as a covering material for protecting a covered object. The heat shrinkable tube is a tube that shrinks in diameter when heated. More specifically, the heat shrinkable tube into which the object to be covered is inserted is heated on the object to be covered. By covering the object to be covered by the heat shrinkable tube which has shrunk, the object to be covered is protected. Heat shrinkable tube 1 in FIG. 1 is made of a single base material layer having a cylindrical shape.

Heat shrinkable tube 1 may be formed of a resin composition for forming a heat shrinkable tube, and heat shrinkable tube 1 may include an ethylene-tetrafluoroethylene copolymer as a main component. Heat shrinkable tube 1 has ethylene-tetrafluoroethylene copolymer as the main component, and thus the melting point and the storage modulus at the melting point or higher are easily controlled.

Heat shrinkable tube 1 may contain other additives as necessary. Examples of such additives include a strength retention agent, an antioxidant, a flame retardant, a copper inhibitor, a crosslinking aid, a coloring agent, a heat stabilizer, an infrared light absorber, and an ultraviolet absorber. The content of the additive in heat shrinkable tube 1 may be less than 5% by mass, or may be less than 3% by mass. When the content of the additive is equal to or more than the upper limit, the performance of heat shrinkable tube 1 may be varied.

The lower limit of the melting point of heat shrinkable tube 1 is 210°C, or may be 215°C. When the melting point of heat shrinkable tube 1 is less than the lower limit, the heat shrinkable tube may be softened or deformed during use at a high temperature. On the other hand, the upper limit of the melting point of heat shrinkable tube 1 is 250°C, or may be 240°C. When the melting point of heat shrinkable tube 1 exceeds the upper limit, the shrinkage temperature of manufactured heat shrinkable tube 1 when heated becomes high, and thus there is a possibility that the covered object may be damaged by heat. The heat shrinkable tube having a melting point in the above range can ensure heat resistance and suppress damage to the covered object due to heat.

The average inner diameter and the average thickness of heat shrinkable tube 1 are appropriately selected in accordance with the use and the like. The average inner diameter of heat shrinkable tube 1 before heat shrinkage may be, for example, 1 mm to 60 mm. Further, the average inner diameter of heat shrinkable tube 1 after heat shrinkage can be, for example, 25% to 65% of the average inner diameter before heat shrinkage. In addition, the average thickness of heat shrinkable tube 1 can be, for example, 0.1 mm to 5 mm.

The lower limit of the storage modulus of heat shrinkable tube 1 at 250°C to 280°C may be 0.8 MPa, 1.0 MPa, or 1.2 MPa. The upper limit of the storage modulus may be 2.8 MPa, 2.0 MPa, or 1.6 MPa. When the storage modulus at 250°C to 280°C is less than the lower limit, the strength and shrinkage performance (shape memory effect) of heat shrinkable tube 1 at high temperature may be insufficient. On the other hand, when the storage modulus exceeds the upper limit, the tube is difficult to expand, and thus it may be difficult to suppress the variation in quality of heat shrinkable tube 1. Further, the uneven thickness ratio at the time of expansion may become poor, and the value or the variation of the length change ratio at the time of shrinkage may be increased. By setting the storage modulus to the above range, heat shrinkable tube 1 has excellent deformability when heated to a temperature equal to or higher than the melting point, and the diameter expansion can be easily and reliably achieved in the manufacturing process. This can reduce variations in quality.

The lower limit of the arithmetic average roughness Ra of the surface of heat shrinkable tube 1 may be 0.10 µm, 0.30 µm, or 0.50 µm. When the arithmetic average roughness Ra of the surface of heat shrinkable tube 1 is less than the lower limit, the absorption is small when heat shrinkable tube 1 is heated by an infrared light heating device, and thus the heating may be insufficient. On the other hand, the upper limit of the arithmetic average roughness Ra may be 2.00 µm or less, 1.50 µm, or 1.00 µm. When the arithmetic average roughness Ra of the surface of heat shrinkable tube 1 exceeds the upper limit, the scattering of visible light increases, and the visibility of the inside of heat shrinkable tube 1 decreases, and thus it may be difficult to check the degree of shrinkage of the heat shrinkable connecting member including heat shrinkable tube 1. In the heat shrinkable connecting component for the insulated electrical wires, visibility of the inside of heat shrinkable tube 1 is required in order to check a shrinkage state, melting of a solder material, a connection state of the electrical wires, and the like. Thus, the heat shrinkable tube used in the heat shrinkable connecting component is required to have transparency. In heat shrinkable tube 1, the arithmetic average roughness Ra is in the above range, whereby the visibility of the inside of heat shrinkable tube 1 can be secured, and the infrared light absorptivity in infrared light (IR) heating during the manufacturing step of heat shrinkable tube 1 can be improved.

### [Connection Portion]

When connection portion 2 is made of solder, a metal-based material can be used as a solder material, and for example, any of Sn, Sb, Pb, Bi, Ag, Cu, Ni, In, Ge, P, and Zn can be used in combination. In addition, from the viewpoint of adjusting the melting point, Sn-Ag, Sn-Cu, Sn-Sb, Sn-Pb, and Pb-In may be contained. The solder material may include a flux.

In heat shrinkable connecting component 50, the melting point of the solder material in connection portion 2 may be 210°C to 240°C, or 220°C to 230°C. When the melting point of the solder material is within the above range, the heat resistance and the connectivity of the insulated electrical wire in heat shrinkable connecting component 50 can be made good by combining heat shrinkable tube 1 and the solder material.

### [Sealing Portion]

Sealing portion 3 is made of a sealing material. As the sealing material, for example, polyolefin resin, fluororesin, or fluororubber can be used. More specifically, as the sealing material mentioned above, one or more of the following can be used by mixing: high-density polyethylene (HDPE), low-density polyethylene (LDPE), linear low-density polyethylene (LLDPE), ethylene-vinyl acetate copolymers (EVA), ethylene-ethyl acrylate copolymers (EEA), ethylene-methyl methacrylate copolymer (EMMA), polyvinylidene fluoride (PVDF), tetrafluoroethylene-hexafluoropropylene copolymer (FEP), tetrafluoroethylene-hexafluoropropylene-vinylidenefluoride copolymer (THV), vinylidene fluoride-based rubber (FKM), fluorinated ethylene propylene-based rubber (FEPM), tetrafluoroethylene-perfluorovinylether-based rubber (FFKM). Among these, tetrafluoroethylene-hexafluoropropylene-vinylidenefluoride copolymer may be used as the main component of the sealing material. By using tetrafluoroethylene-hexafluoropropylene-vinylidenefluoride copolymer having a relatively low melting point as the main component of the sealing material, sealing can be performed at a lower temperature.

The softening point of the sealing material in sealing portion 3 may be 90°C to 170°C, 100°C to 150°C, or 110°C to 140°C. In addition, when the softening point of the sealing material is 90°C to 170°C, the sealing material has better fluidity, and the effect of filling the gap is further enhanced, and thus the sealing property can be further improved. When the softening point is lower than 90°C, the heat shrinkable tube is softened during shrinkage and the shape thereof is likely to change, and thus a gap is likely to be formed and the sealing properties may be deteriorated. When the softening point is higher than 170°C, the fluidity during shrinkage is low, and thus the effect of filling the gap is reduced, and the sealing property may be reduced.

The sealing material may contain an inorganic filler for adjusting the shear viscosity. The inorganic filler may be silica, hydrotalcite, clay, or a combination thereof. The inorganic filler may be silica, hydrotalcite, clay, or a combination thereof, and thus, the inorganic filler may have excellent heat resistance.

The lower limit of the content of the inorganic filler in the sealing material may be 1.0 part by mass or 1.5 parts by mass with respect to 100 parts by mass of the resin in the sealing material. When the content of the inorganic filler is less than 1.0 part by mass, a sufficient improvement effect of the shear viscosity may not be obtained. On the other hand, the upper limit of the content of the inorganic filler in the sealing material may be 4.0 parts by mass, or may be 3.5 parts by mass. When the content of the inorganic filler is more than 4.0 parts by mass, the shear viscosity may be excessively increased, and thus the sealing property may be deteriorated.

The sealing material may include a coloring agent, an antioxidant, an infrared light absorber, and a lubricant as other components.

In the heat shrinkable connecting component, the lower limit of the shear viscosity of the sealing material at 250°C with a shear rate of 100/s is 1000 Pa·s, or may be 1200 Pa·s. When the shear viscosity of the sealing material at 250°C with a shear rate of 100/s is lower than 1000 Pa s, the sealing material is softened and the shape thereof is likely to change when the heat shrinkable tube shrinks, and thus a gap is likely to be formed due to the sealing material flowing out of the heat shrinkable tube during shrinkage, which may result in a decrease in sealing properties. On the other hand, the upper limit of the shear viscosity of the sealing material at 250°C with a shear rate of 100/s is 2000 Pa·s, or may be 1900 Pa s. When the shear viscosity of the sealing material at 250°C with a shear rate of 100/s is higher than the 2000 Pa·s, the fluidity of the heat shrinkable tube during shrinkage is low, and thus the effect of filling the gap is reduced, and the sealing property may be reduced. In the heat shrinkable connecting component, the shear viscosity of the sealing material in sealing portion 3 at 250°C with a shear rate of 100/s is 1000 Pa s to 2000 Pa·s, and thus a gap is less likely to be formed when the heat shrinkable tube shrinks, and the heat shrinkable connecting component has excellent sealing accuracy.

In the heat shrinkable connecting component, the lower limit of the shear viscosity of the sealing material at 215°C with a shear rate of 0.01/s is 7000 Pa·s, or may be 8000 Pa·s. When the shear viscosity of the sealing material at 215°C with a shear rate of 0.01/s is lower than 7000 Pa·s, the sealing material is likely to flow when held at a high temperature for a long period of time, and the sealing property may not be maintained. On the other hand, the upper limit of the shear viscosity of the sealing material at 215°C with a shear rate of 0.01/s is 70000 Pa s, or may be 65000 Pa s. When the shear viscosity of the sealing material at 215°C with a shear rate of 0.01/s is higher than the 70000 Pa·s, the fluidity at a high temperature becomes too low, and the gap cannot be sufficiently filled, and thus the sealing property may be deteriorated. The heat shrinkable connecting component suppresses dripping during use under a high temperature environment and has excellent durability of sealing ability, since the sealing material has a shear viscosity of 7000 Pa·s to 70000 Pa·s at 215°C with a shear rate of 0.01/s.

In the heat shrinkable connecting component, the transmittance of infrared light having a wavelength of 1 µm in the sealing material may be 1.0% to 30.0%, 3% to 22%, or 5% to 16%. When the transmittance of infrared light in the sealing material exceeds the upper limit, heating of sealing portion 3 is delayed during heating with infrared light, and thus softening is less likely to proceed, and thus the sealing property of the heat shrinkable connecting component may be reduced. On the other hand, when the transmittance of infrared light in the sealing material is less than the lower limit, sealing portion 3 is preferentially softened, and the effect of suppressing the outflow of the solder material is reduced, and thus the sealing property of the heat shrinkable connecting component may be deteriorated. When the transmittance of infrared light having a wavelength of 1 µm in the sealing material is within the above range, the infrared light absorptivity of the heat shrinkable connecting component in infrared light heating can be controlled to be within a good range, and the sealing property of the heat shrinkable connecting component can be made good.

### [Connection Portion]

Connection portion 2 is disposed between the pair of sealing portions 3 of heat shrinkable tube 1 and connects conductors of insulated electrical wires. Connection portion 2 may be formed of, for example, solder, solder braid, or crimp sleeve.

When connection portion 2 is a solder, as a metal material serving as the solder material constituting connection portion 2, for example, any of Sn, Sb, Pb, Bi, Ag, Cu, Ni, In, Ge, P, and Zn can be used in combination. In addition, from the viewpoint of adjusting the melting point, Sn-Ag, Sn-Cu, Sn-Sb, Sn-Pb, and Pb-In may be contained. The metal material may include a flux.

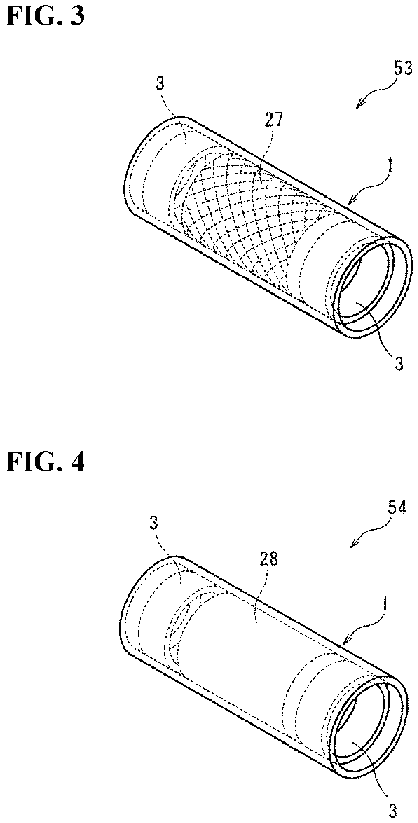

A heat shrinkable connecting component 53 according to another embodiment shown in FIG. 3 includes heat shrinkable tube 1, the pair of sealing portions 3 disposed on the inner peripheral surface of two end portions of heat shrinkable tube 1, and a solder braid 27. When connection portion 2 is a solder braid in which braided wires are impregnated with solder, as a metal material constituting the braided wires, for example, Cu, Fe, Sn, Sb, Ag, Ni, Al, Zn, or combinations thereof can be used. As the metal material constituting the solder material of the solder braid, the same material as the above-described solder material can be used. Solder braid 27 may be further combined with the above-mentioned solder.

A heat shrinkable connecting component 54 according to another embodiment shown in FIG.4 includes heat shrinkable tube 1, the pair of sealing portions 3 disposed on the inner peripheral surface of two end portions of heat shrinkable tube 1, and a crimp sleeve 28. When connection portion 2 is a crimp sleeve, as a metal material constituting the crimp sleeve, for example, one or more of Cu, Fe, Sn, Sb, Ag, Ni, Al, and Zn can be used. Further, a coating layer may be formed on the surface in order to suppress abrasion and scratches and to improve chemical durability. For the coating layer, one or more of Cu, Fe, Sn, Sb, Ag, Ni, Al, and Zn can be used. The coating layer may have a thickness of 5 µm to 30 µm. When the thickness is less than 5 µm, the effect of suppressing abrasion and scratches and improving chemical durability is small, and when the thickness is more than 30 µm, the productivity is lowered.

When connection portion 2 is a solder or a solder braid, the melting point of the solder material in connection portion 2 may be 210°C to 240°C, or may be 220°C to 230°C. When the melting point of the solder material is 210°C to 240°C, the combination of heat shrinkable tube 1, connection portion 2, and sealing portion 3 can provide good heat resistance, sealing property, and connection property for insulated electrical wires in heat shrinkable connecting component 50.

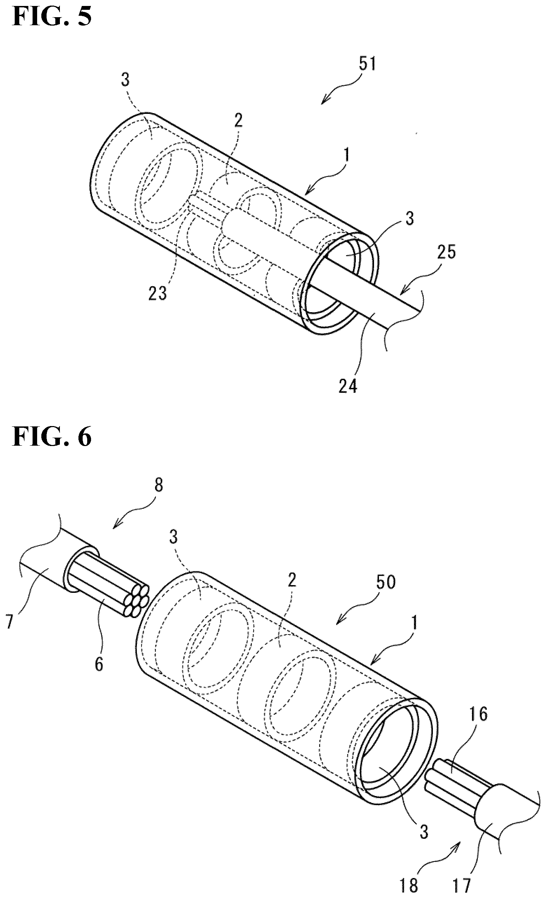

The heat shrinkable connecting component may include a grounding insulated wire. A heat shrinkable connecting component 51 shown in FIG. 5 includes heat shrinkable tube 1, the pair of sealing portions 3 disposed on the inner peripheral surface of two end portions of heat shrinkable tube 1, connection portion 2 disposed on the inner peripheral surface between the pair of sealing portions 3 of heat shrinkable tube 1, and a grounding insulated wire 25. Grounding insulated wire 25 includes an element wire 23 and an insulating layer 24 covering element wire 23. Heat shrinkable connecting component 51 includes grounding insulated wire 25, and thus grounding (earth) can be easily performed. The insulating covering of the grounding insulated wire may be resin or braid.

According to the heat shrinkable connecting component, a heat shrinkable connecting component having excellent sealing ability and durability under a high temperature environment can be provided as a connecting component for insulated electrical wires.

### <Manufacturing Method of Heat Shrinkable Connecting Component>

The method of manufacturing a heat shrinkable connecting component is a method of manufacturing a heat shrinkable connecting component, and includes a step of disposing a pair of sealing portions on an inner peripheral surface of two end portions of a heat shrinkable tube (sealing portion disposing step). Further, the method of manufacturing a heat shrinkable connecting component may further include the steps of producing a sealing portion using a sealing material (sealing portion producing step), extruding a resin composition for forming a heat shrinkable tube into a tube shape (extrusion molding step), expanding a diameter of the tube-shaped extrusion-molded product (diameter expanding step), and disposing a connection portion for bonding a conductor on an inner peripheral surface between the pair of sealing portions in the heat shrinkable tube (bonding portion disposing step).

### (Extrusion Molding Step)

First, a resin composition for forming the heat shrinkable tube is prepared by mixing a main component resin of the heat shrinkable tube and other additives as necessary using a melt mixer or the like. In the resin composition, the melting point can be controlled by selecting the main component resin and adjusting the crosslinking. The melt mixer is not particularly limited, and for example, an open roll, a Banbury mixer, a pressure kneader, a single-screw mixer, or a multi-screw mixer can be used.

Next, in this step, the resin composition for forming the heat shrinkable tube is extruded into a tube shape. The resin composition is extrusion-molded by a melt extruder. Specifically, the resin composition is melted by being heated to a temperature equal to or higher than the melting point, is eluted from an extrusion die having a cylindrical space, and is solidified by being cooled to a temperature equal to or lower than the melting point with cooling water or the like. Thus, the resin composition is extrusion-molded into a tube shape.

The tube-shaped extrusion-molded product formed by the extrusion molding step may be crosslinked by irradiation. By crosslinking the tube formed in the extrusion molding step, shrinkage performance (shape memory effect) when the heat shrinkable tube is heated and shrinks at a high temperature in a heat shrinkable connecting component heating step described later and shape retainability at a high temperature after shrinkage are imparted. Examples of radiation used for the irradiation crosslinking include electron beams (β-rays) and γ-rays.

### (Diameter Expanding Step)

In the diameter expanding step, the extrusion-molded product is subjected to diameter expansion. As a method of expanding the diameter of the extrusion-molded product, a known diameter expansion method which is generally used for producing a conventional heat shrinkable tube can be used. For example, a method of introducing compressed air into the inside of an extrusion molded product in a state of being heated to a temperature of the melting point or higher, a method of reducing pressure from the outside, a method of inserting a metal rod into the inside, or the like is used to increase the diameter of the extrusion molded product to a predetermined inner diameter, and then the extrusion-molded product is cooled to fix the shape. Such an diameter expansion of the extrusion molded product is performed so that the inner diameter of the extrusion-molded product is 1.2 times to 4 times, for example. By fixing the shape of the extrusion-molded product having an increased diameter, a heat shrinkable tube is obtained. As the fixing method, for example, a method of cooling the heat shrinkable tube to a temperature equal to or lower than the melting point of the main component resin may be adopted. It is noted that, in the diameter expanding step, in order to reduce the influence on a surface roughness of the inner surface of the heat shrinkable tube, the roughness of the metal rod may be reduced, or coating or application of a lubricant may be performed. Further, the influence on the surface roughness of the inner surface of the heat shrinkable tube can be reduced by reducing the speed of the diameter expansion. The extrusion-molded product is increased in diameter and fixed in shape in this manner to form a heat shrinkable tube.

### (Sealing Portion Producing Step)

In the sealing portion producing step, a sealing portion is formed using a sealing material. First, a sealing material for forming the sealing portion is prepared using a melt mixer or the like. The melt mixer is not particularly limited, and for example, an open roll, a Banbury mixer, a pressure kneader, a single-screw mixer, or a multi-screw mixer can be used.

Next, the sealing material is extrusion-molded by a melt extruder. Specifically, the sealing material is heated to a temperature equal to or higher than the melting point of a main component resin to be melted, and is eluted from an extrusion die having a cylindrical space. Then, the sealing material is cooled with cooling water or the like to a temperature equal to or lower than the melting point of the main component resin and solidified, and thus the sealing material is extrusion-molded into a tube shape. It is cut into a predetermined length to form a ring-shaped sealing portion.

### (Sealing Portion Disposing Step)

In the sealing portion disposing step, a pair of sealing portions are disposed on the inner peripheral surfaces of the two end portions of the heat shrinkable tube. First, the heat shrinkable tube formed after the diameter expanding step is cut into a desired length. Next, the pair of sealing portions are inserted into the inner peripheral surfaces of the two end portions of the heat shrinkable tube which has been cut. Then, the heat shrinkable tube is shrunk to fix the sealing portions in place, thereby disposing the sealing portions. When a connection portion is further disposed to improve the bonding effect of the conductors, the connection portion for bonding the conductors is disposed on the inner peripheral surface between the pair of sealing portions in the heat shrinkable tube (connection portion disposing step). In the connection portion disposing step, the connection portion for bonding the conductors to the inner peripheral surface between the pair of sealing portions is disposed together with the sealing portions.

In the method of manufacturing a heat shrinkable connecting component, the lower limit of the melting point of the heat shrinkable tube is 210°C, or may be 215°C. When the melting point of the heat shrinkable tube is lower than 210°C, the heat shrinkable tube may be softened or deformed during use at a high temperature. The upper limit of the melting point of the heat shrinkable tube is 250°C, or may be 240°C. When the melting point of the heat shrinkable tube is higher than 250°C, the shrinkage temperature of the heat shrinkable tube is increased, and thus the covered object may be damaged by heat. The heat shrinkable tube has a melting point in the above range, and thus can secure heat resistance and suppress damage to a covered object due to heat.

In the method of manufacturing a heat shrinkable connecting component, the lower limit of the shear viscosity of the sealing material at 250°C with a shear rate of 100/s is 1000 Pa s, or may be 1200 Pa s. When the shear viscosity of the sealing material at 250°C with a shear rate of 100/s is lower than 1000 Pa·s, the sealing material is softened and the shape thereof is likely to change when the heat shrinkable tube shrinks, and thus a gap is likely to be formed due to the sealing material flowing out of the heat shrinkable tube during shrinkage, which may result in a decrease in sealing property. On the other hand, the upper limit of the shear viscosity of the sealing material at 250°C with a shear rate of 100/s is 2000 Pa·s, or may be 1900 Pa·s. When the shear viscosity of the sealing material at 250°C with a shear rate of 100/s is higher than the 2000 Pa·s, the fluidity of the heat shrinkable tube during shrinkage is low, and thus the effect of filling the gap is reduced, and the sealing property may be reduced. When the shear viscosity of the sealing material in the sealing portion at 250°C with a shear rate of 100/s is 1000 Pa·s to 2000 Pa s, a gap is less likely to be formed when the heat shrinkable tube shrinks, and a heat shrinkable connecting component having excellent sealing accuracy can be produced.

In the method of manufacturing a heat shrinkable connecting component, the lower limit of the shear viscosity of the sealing material at 215°C with a shear rate of 0.01/s is 7000 Pa s, or may be 8000 Pa s. When the shear viscosity of the sealing material at 215°C with a shear rate of 0.01/s is lower than 7000 Pa s, the sealing material is likely to flow when held at a high temperature for a long period of time, and the sealing property may not be maintained. The upper limit of the shear viscosity of the sealing material at 215°C with a shear rate of 0.01/s is 70000 Pa·s, or may be 65000 Pa·s. When the shear viscosity of the sealing material at 215°C with a shear rate of 0.01/s is higher than 70000 Pa·s, the fluidity of the sealing material is too low when the sealing material is held at a high temperature for a long period of time, and thus the gap cannot be sufficiently filled, which may result in a decrease in sealing property. When the shear viscosity of the sealing material at 215°C with a shear rate of 0.01/s is 7000 Pa s to 70000 Pa s, a heat shrinkable connecting component which suppresses dripping during use in a high temperature environment and has excellent durability of sealing ability can be produced.

In the method of manufacturing a heat shrinkable connecting component, the softening point of the sealing material may be 90°C to 170°C, 100°C to 150°C, or 110°C to 140°C. In addition, when the softening point of the sealing material is 90°C to 170°C, the sealing material has better fluidity and the effect of filling the gap is further increased, and thus a heat shrinkable connecting component having better sealing property can be manufactured. When the softening point is lower than 90°C, the heat shrinkable tube is softened during shrinkage and the shape thereof is likely to change, and thus a gap is likely to be formed and the sealing property may be deteriorated. When the softening point is higher than 170°C, the fluidity during shrinkage is low, and thus the effect of filling the gap is reduced, and the sealing property may be reduced.

Other configurations of the manufacturing method of the heat shrinkable connecting component are as described above.

According to the method of manufacturing a heat shrinkable connecting component, a heat shrinkable connecting component having excellent sealing ability and durability under a high temperature environment can be manufactured.

### [Mode of Use of Heat Shrinkable Connecting Component]

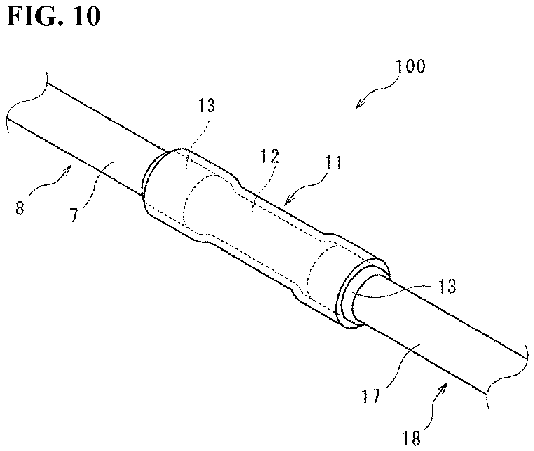

Heat shrinkable connecting component 50 is used, for example, as a component for connecting a plurality of insulated electrical wires, and also as a component for attaching a ground wire for grounding an insulated electrical wire. As an example of a mode of connecting a plurality of insulated electrical wires using heat shrinkable connecting component 50, a method of connecting connection portions of conductors exposed from two insulated electrical wires will be described with reference to FIG. 6 to FIG. 10. It is noted that, the number and configuration of the insulated electrical wires are not limited to those shown in FIG. 6 to FIG. 10. The step of connecting a plurality of insulated electrical wires using heat shrinkable connecting component 50 mainly includes a heat shrinkable connecting component covering step, a heat shrinkable connecting component heating step, and a heat shrinkable connecting component cooling step. Hereinafter, a mode of use of connecting two insulated electrical wires 8 and 18 using heat shrinkable connecting component 50 to obtain an electrical wire bundle 100 shown in FIG. 10 will be described.

### (Heat Shrinkable Connecting Component Covering Step)

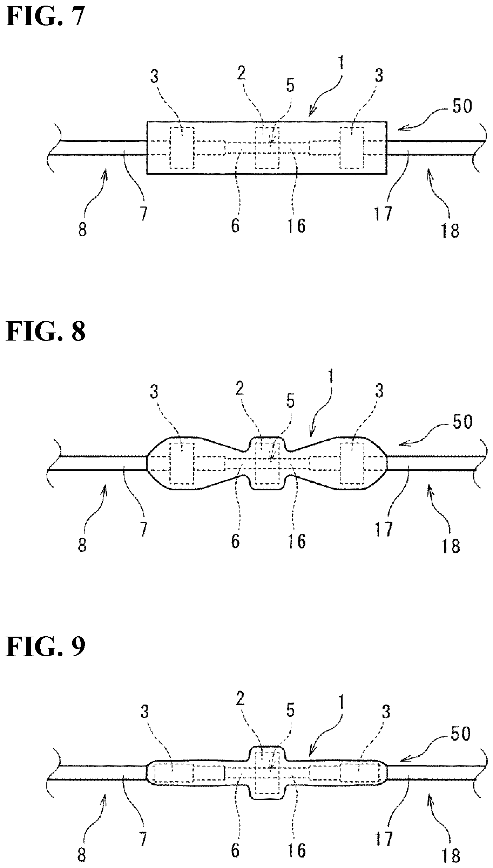

When two insulated electrical wires 8 and 18 are connected using heat shrinkable connecting component 50, first, as shown in FIG. 6, a conductor 6 exposed from an insulating layer 7 of insulated electrical wire 8 and a conductor 16 exposed from an insulating layer 17 of an insulated electrical wire 18 are inserted from openings at both ends of heat shrinkable connecting component 50. Then, as shown in FIG. 7, heat shrinkable connecting component 50 is placed so as to cover the boundary between the exposed portion of conductor 6 and insulating layer 7 and the boundary between the exposed portion of conductor 16 and insulating layer 17. When heat shrinkable connecting component 50 is covered on two insulated electrical wires 8 and 18, a conductor connecting portion 5 around the boundary between exposed conductor 6 of insulated electrical wire 8 and exposed conductor 16 of insulated electrical wire 18 may be arranged to be covered by connection portion 2.

### (Heat Shrinkable Connecting Component Heating Step)

In the heat shrinkable connecting component heating step, heat shrinkable connecting component 50 is heated and thermally shrunk. The heating method may be, for example, a method of heating heat shrinkable connecting component 50 with a heat gun, an infrared light heating device, or the like. Further, the heating temperature is determined by the heat shrinkage temperature of heat shrinkable connecting component 50, and is, for example, 200°C to 600°C. In addition, the heating time may be a time for which heat shrinkable connecting component 50 is sufficiently shrunk, and may be, for example, 1 second to 30 seconds.

As shown in FIG. 8 to FIG. 10, as the shrinkage behavior of heat shrinkable connecting component 50, heat shrinkable tube 1 may be shrunk first, sealing portion 3 may be deformed next, and connection portion 2 may be melted last. When heat shrinkable connecting component 50 is heated, the solder material of connection portion 2 flows and spreads. FIG. 10 shows a heat shrinkable tube 11 after shrinkage, a connection portion 12 after melting, and sealing portion 13 after melting in electrical wire bundle 100 after connection. The sealing material of sealing portion 3 has a high viscosity and thus does not spread as compared to connection portion 2, thereby blocking the opening of heat shrinkable tube 1. Thus, the solder material of connection portion 2 is prevented from flowing out from the opening of heat shrinkable tube 1. The solder material of connection portion 2 covers the exposed portions of conductor 6 of insulated electrical wire 8 and conductor 16 of insulated electrical wire 18, and enters the inside of insulating layer 17 from the boundary between the exposed portion of conductor 16 and insulating layer 17 while enters the inside of insulating layer 7 from the boundary between the exposed portion of conductor 6 and insulating layer 7.

### (Heat Shrinkable Connecting Component Cooling Step)

In the heat shrinkable connecting component cooling step, heat shrinkable connecting component 50 after the heat shrinkage is cooled. The cooling method is not particularly limited, and for example, natural cooling in the atmosphere or forced cooling by cold air can be used. The solder material and the sealing material are solidified by the cooling, and the insulated electrical wires are connected to each other and the insulated electrical wires are waterproofed.

### [Other Embodiments]

The embodiments disclosed herein are to be considered in all respects as illustrative and not restrictive. The scope of the present invention is not limited to the configurations of the above embodiments, but is defined by the scope of the claims, and is intended to include all modifications within the scope and meaning equivalent to the scope of the claims.

### [Example]

The present invention will be described in more detail with reference to the following examples, but the present invention is not limited to the following examples.

### <Test Example 1>

Heat shrinkable tubes No. 1 to No. 12 in Table 1 were produced by selection of raw materials, resin mixing, extrusion, irradiation, and diameter expansion step. First, a tube was formed by melt extrusion molding using a resin composition obtained by mixing triallyl isocyanurate as a crosslinking aid with ethylene-tetrafluoroethylene copolymer (ETFE) containing fluorine in a content described in Table 1. The extrusion molding was performed at a die temperature of 280°C, a draw-down ratio of 10, and a line speed of 20 m/min. Thereafter, crosslinking was performed by electron beam irradiation under the condition of an irradiation amount of 25 kGy to 400 kGy. The irradiated tube was heated to 250°C to 280°C, and the pressure of the inside of the tube was made higher than the outside by using an expansion die, thereby the expansion was performed. As the expansion die, a die coated with a fluorine resin was used. The melting point and the storage modulus at high temperature were adjusted by the selection of raw materials and the degree of crosslinking. The shrinkage was performed by heating at 270°C for 10 minutes. The melting point of the tube and the storage modulus [MPa] at 250°C to 280°C of each of the heat shrinkable tubes No. 1 to No. 12 are shown.

Next, a ring-shaped connection portion was provided at the center of the metal rod in the longitudinal direction, and ring-shaped sealing portions were provided at the two end portions, using the heat shrinkable tube, a solder material (Sn 96.0% by mass, Ag 3.0% by mass, and Cu 1.0% by mass) having a melting point of 223°C, and sealing materials (THV, EVA, and PVDF) containing silica described in Table 1. Next, a lead wire was placed so that the tip thereof was positioned at the solder material portion, and the heat shrinkable tube was placed around the lead wire. Then, the tube was shrunk by applying hot air at 500°C with a heat gun to fix and dispose the solder material and the sealing portions in place, and the tube was taken out from the metal rod after cooling, thereby producing a heat shrinkable connecting component. The tube was 20 mm long. The sealing material was made with a width of 2 mm and a thickness of 0.4 mm. The solder material was made with a width of 2.5 mm and a thickness of 0.4 mm. The shear viscosity was adjusted by the amount of silica added. The shear viscosities at 250°C and 215°C are shown in Table 1.

The sealing ability of the heat shrinkable connecting component was evaluated by placing the heat shrinkable connecting component on the portion of the ETFE electrical wire where the covering was removed, shrinking the heat shrinkable connecting component, applying a voltage in a liquid, and examining whether or not the leakage current was equal to or less than a threshold value. For evaluation of heat resistance, the electrical wire after shrinkage of the heat shrinkable connecting component was heated at 215°C for 750 hours, and then evaluation of the leakage current was performed. The immersion liquid was a solution of 5% NaCl, 0.5% surfactant, and the voltage of the 1 kV was applied for 60 seconds to evaluate the leakage current. The evaluation results of the sealing ability of the heat shrinkable connecting component are shown in Table 1. The evaluation criteria of the sealing ability of the heat shrinkable connecting component are as follows.
A: The pass rate of the leakage current test is 90% or more.
B: The pass rate of the leakage current test is 80% or more.
C: The pass rate of the leakage current test is 70% or more.
D: The pass rate of the leakage current test is less than 70%.

**[Table 1]**

| Test No. | | 1 | 2 | 3 | 4 | 5 | 6 | 7 | 8 | 9 | 10 | 11 | 12 |
|---|---|---|---|---|---|---|---|---|---|---|---|---|---|
| Main Component Resin of Heat Shrinkable Tube | Composition | ETFE | ETFE | ETFE | ETFE | ETFE | ETFE | ETFE | ETFE | ETFE | ETFE | ETFE | ETFE |
| Properties of Heat Shrinkable Tube | Melting Point of Tube [°C] | 225 | 225 | 225 | 225 | 225 | 225 | 225 | 225 | 225 | 225 | 225 | 225 |
| | Storage Modulus at 250°C to 280°C [MPa] | 1.0 | 1.0 | 1.0 | 1.0 | 1.0 | 1.0 | 1.0 | 1.0 | 1.0 | 1.0 | 1.0 | 1.0 |
| Properties of Sealing Material | Composition of Sealing Material | THV + EVA | THV + EVA | THV + PVDF | THV | THV | THV | THV | THV | THV | THV + EVA | THV + PVDF | THV + PVDF |
| | Amount of Silica Added | 0.2 | 0.8 | 0.8 | 1.0 | 1.5 | 2.5 | 3.0 | 3.5 | 4.0 | 4.5 | 4.5 | 5.0 |
| | Shear Viscosity of Sealing Material [Pa·s] Temperature 250°C, Shear Rate 100/s | 800 | 1000 | 900 | 1000 | 1100 | 1300 | 1800 | 1900 | 2000 | 2000 | 2500 | 3000 |
| | Shear Viscosity of Sealing Material [Pa·s] Temperature 215°C, Shear Rate 0.01/s | 5000 | 6000 | 7000 | 7000 | 10000 | 15000 | 50000 | 60000 | 70000 | 85000 | 70000 | 100000 |
| Properties of Solder Material | Composition of Solder Material | Sn | Sn | Sn | Sn | Sn | Sn | Sn | Sn | Sn | Sn | Sn | Sn |
| | | Ag | Ag | Ag | Ag | Ag | Ag | Ag | Ag | Ag | Ag | Ag | Ag |
| | | Cu | Cu | Cu | Cu | Cu | Cu | Cu | Cu | Cu | Cu | Cu | Cu |
| | Melting point of Solder Material [°C] | 223 | 223 | 223 | 223 | 223 | 223 | 223 | 223 | 223 | 223 | 223 | 223 |
| Evaluation of Heat Shrinkable Connecting Component | Sealing Ability of Heat Shrinkable Connecting Component | D | D | D | C | B | A | A | B | C | D | D | D |

As shown in Table 1, when the shear viscosity of the sealing material at 250 °C with a shearing rate of 100/s was 1000 Pa·s to 2000 Pa·s, and the shear viscosity of the sealing material at 215 °C with a shearing rate of 0.01/s was 7000 Pa·s to 70000 Pa·s in addition to the shear viscosity of the sealing material at 250 °C with a shearing rate of 100/s, good results were obtained in the sealing ability of heat shrinkable connecting component. When the shear viscosity was lower than 1000 Pa·s, the heat shrinkable tube was softened during shrinkage and the shape was easily changed, and the sealing property was deteriorated, so that the pass rate of the heat shrinkable connecting component in the leakage current test was decreased. On the other hand, when the shear viscosity was higher than the 2000 Pa s, the effect of filling the gap was reduced due to low fluidity during shrinkage of the heat shrinkable tube, and the pass rate of the heat shrinkable connecting component in the leakage current test was reduced. In addition, in No. 1 and No. 2 in which the shear viscosities of the sealing materials at 215°C with a shear rate of 0.01/s were less than 7000 Pa s, the sealing materials easily flowed when the sealing materials were held at high temperatures for a long period of time, and the pass rates in the leakage current test decreased. In No. 10 to No. 12 in which the shear viscosities of the sealing materials at 215°C with a shear rate of 0.01/s were higher than 70000 Pa s, the effects of filling the gaps were low due to low fluidity, and the pass rates in the leakage current test decreased due to the decrease in sealing properties.

### <Test Example 2>

Heat shrinkable tubes No. 13 to No. 20 were produced in the same manner as in Test Example 1, except that the melting point and the storage modulus at high temperature of the heat shrinkable tube were adjusted by the selection of the raw material of the ethylene-tetrafluoroethylene copolymer and the degree of crosslinking. Then, the sealing portions and the solder portions were produced in the same procedures as those of No. 6 above, and heat shrinkable connecting components No. 13 to No. 20 were produced. The evaluation results of the sealing ability of the heat shrinkable connecting component evaluated in the same manner as in Test Example 1 are shown in Table 2.

**Table 2**

| Test No. | | 13 | 14 | 15 | 16 | 17 | 18 | 19 | 20 |
|---|---|---|---|---|---|---|---|---|---|
| Main Component Resin of Heat Shrinkable Tube | Composition | ETFE | ETFE | ETFE | ETFE | ETFE | ETFE | ETFE | ETFE |
| Properties of Heat Shrinkable Tube | Melting Point of Tube [°C] | 225 | 225 | 225 | 225 | 225 | 225 | 225 | 225 |
| | Storage Modulus at 250°C to 280°C [MPa] | 0.6 | 0.8 | 1.0 | 1.2 | 1.6 | 2.0 | 2.8 | 3.0 |
| Evaluation of Heat Shrinkable Connecting Component | Sealing Ability of Heat Shrinkable Connecting Component | C | B | A | A | A | A | B | C |

As shown in Table 2, the heat shrinkable connecting components No. 14 to No. 19 each having the storage modulus at 250°C to 280°C of 0.8 MPa to 2.8 MPa showed good sealing ability. On the other hand, No. 13 having a storage modulus of less than 0.8 MPa and No. 20 having a storage modulus of more than 2.8 MPa had slightly decreased sealing ability.

### <Test Example 3>

Heat shrinkable tubes No. 21 to No. 26 were produced by setting the main component resin and the physical properties of the heat shrinkable tube in the same manner as in No. 14 of Test Example 2. Next, a ring-shaped solder portion was placed at the center portion in the longitudinal direction of the metal rod, and ring-shaped sealing portions were placed at the two end portions, using a heat shrinkable tube, solder material (Sn 96.0% by mass, Ag 3.0% by mass, and Cu 1.0% by mass) having a melting point of 223°C, and sealing materials. The sealing material includes EVA, PVDF, and THV as listed in Table 3, and 1.5 parts by mass of silica based on 100 parts by mass of resin in the sealing material. Next, a lead wire was placed so that the tip thereof was positioned at the solder material portion, and then a heat shrinkable tube was placed around the lead wire. Then, the solder portion and the sealing portion were fixed and disposed by applying hot air of 500°C to the tube with a heat gun to shrink the tube, and the tube was taken out from the metal rod after cooling, thereby producing each of heat shrinkable connecting components No. 21 to No. 26. The tube was 20 mm long. The sealing material was made with a width of 2 mm and a thickness of 0.4 mm. The solder material was made with a width of 2.5 mm and a thickness of 0.4 mm. Table 3 shows the softening points of the sealing materials of the heat shrinkable connecting components No. 21 to No. 26 and the evaluation results of the sealing ability of the heat shrinkable connecting components evaluated in the same manner as in Test Example 1. The softening point of the sealing material was measured using a thermomechanical analyzer TMA-50 (manufactured by Shimadzu Corporation) and the softening point was defined as a temperature at which the sheet having the thickness of 0.4 mm became 50% thick when the temperature was raised at a rate of 10°C/min and the sheet was pushed with the pushing rod having the diameter of 0.5 mmϕ with a pressure of 5 kPa. The softening point was adjusted by the kind and ratio of the resins of the sealing material. The sealing materials all had a shear viscosity of 1000 Pa·s to 2000 Pa·s at 250°C with a shear rate of 100/s, and a shear viscosity of 7000 Pa·s to 70000 Pa·s at 215°C with a shear rate of 0.01/s.

**Table 3**

| Test No. | | 21 | 22 | 23 | 24 | 25 | 26 |
|---|---|---|---|---|---|---|---|
| Main Component Resin of Heat Shrinkable Tube | Composition | ETFE | ETFE | ETFE | ETFE | ETFE | ETFE |
| Properties of Heat Shrinkable Tube | Melting Point of Tube [°C] | 225 | 225 | 225 | 225 | 225 | 225 |
| | Storage Modulus at 250°C to 280°C [MPa] | 0.8 | 0.8 | 0.8 | 0.8 | 0.8 | 0.8 |
| Properties of Sealing Material | Composition of Sealing Material | EVA PVDF | EVA PVDF | EVA PVDF | THV PVDF | THV PVDF | THV PVDF |
| | Softening Point of Sealing Material [°C] | 80 | 90 | 100 | 160 | 170 | 180 |
| Properties of Solder Material | Composition of Solder Material | Sn | Sn | Sn | Sn | Sn | Sn |
| | | Ag | Ag | Ag | Ag | Ag | Ag |
| | | Cu | Cu | Cu | Cu | Cu | Cu |
| | Melting point of Solder Material [°C] | 223 | 223 | 223 | 223 | 223 | 223 |
| Evaluation of Heat Shrinkable Connecting Component | Sealing Ability of Heat Shrinkable Connecting Component | C | B | A | A | B | C |

As shown in Table 3, the heat shrinkable connecting components No. 22 to No. 25, in which the softening points of the sealing materials were in 90°C to 170°C, exhibited good sealing ability. In No. 21 in which the softening point was lower than 90°C, the heat shrinkable tube was soft and easily changed in shape during shrinkage, and the sealing property was deteriorated, so that the pass rate of the heat shrinkable connecting component in the leakage current test was lowered. In addition, when the heat shrinkable connecting component was held under a high temperature for a long period of time, the sealing material was likely to flow, and the sealing property was difficult to maintain, so that the pass rate of the heat shrinkable connecting component in the leakage current test was slightly decreased. In No. 26 in which the softening point was higher than 170°C, the effect of filling the gap was low due to low fluidity when the heat shrinkable tube was shrunk, and the sealing property was lowered, so that the pass rate of the leakage current test of the heat shrinkable connecting component was slightly lowered.

### <Test Example 4>

Heat shrinkable tubes No. 27 to No. 34 were produced in the same manner as No. 14 of Test Example 2 except that the raw materials of the ethylene-tetrafluoroethylene copolymer were selected so that the fluorine content in the ethylene-tetrafluoroethylene copolymer was the value shown in Table 4. Next, heat shrinkable connecting components No. 27 to No. 34 were produced by steps similar to those in Test Example 2 using the heat shrinkable tubes, solder materials (Sn 67.0% by mass, Pb 32.0% by mass, and Cd 1.0% by mass) each having a melting point of 218°C, and sealing materials (THV 70% by mass and PVDF 30% by mass) each having a softening point of 160°C described in Table 4, except that the sealing materials were selected so that the transmittance of infrared light having a wavelength of 1 µm in the sealing materials had the values shown in Table 4. The transmittance of infrared light in the sealing material was adjusted by the amount of titanium oxide added. Table 4 shows the infrared light transmittance at a wavelength of 1 µm of the sealing material in each of the heat shrinkable connecting components No. 27 to No. 34 and the evaluation results of the sealing ability of the heat shrinkable connecting components evaluated in the same manner as in Test Example 1. An infrared light heating device using a xenon lamp was used for shrinking the heat shrinkable connecting component. Each sealing material had a shear viscosity of 1000 Pa·s to 2000 Pa·s at 250°C with a shear rate of 100/s, and a shear viscosity of 7000 Pa·s to 70000 Pa·s at 215°C with a shear rate of 0.01/s.

**Table 4**

| Test No. | | 27 | 28 | 29 | 30 | 31 | 32 | 33 | 34 |
|---|---|---|---|---|---|---|---|---|---|
| Main Component Resin of Heat Shrinkable Tube | Composition | ETFE | ETFE | ETFE | ETFE | ETFE | ETFE | ETFE | ETFE |
| | Fluorine Content [% by mass] | 60 | 60 | 60 | 60 | 60 | 60 | 60 | 60 |
| Properties of Heat Shrinkable Tube | Melting Point of Tube [°C] | 225 | 225 | 225 | 225 | 225 | 225 | 225 | 225 |
| | Storage Modulus at 250°C to 280°C [MPa] | 0.8 | 0.8 | 0.8 | 0.8 | 0.8 | 0.8 | 0.8 | 0.8 |
| Properties of Sealing Material | Composition of Sealing Material | THV PVDF | THV PVDF | THV PVDF | THV PVDF | THV PVDF | THV PVDF | THV PVDF | THV PVDF |
| | Softening Point of Sealing Material [°C] | 160 | 160 | 160 | 160 | 160 | 160 | 160 | 160 |
| | Transmittance of Sealing Material [%] | 0.1 | 1.0 | 3.0 | 5.0 | 16.0 | 22.0 | 30.0 | 40.0 |
| Properties of Solder Material | Composition of Solder Material | Sn | Sn | Sn | Sn | Sn | Sn | Sn | Sn |
| | | Pb | Pb | Pb | Pb | Pb | Pb | Pb | Pb |
| | | Cd | Cd | Cd | Cd | Cd | Cd | Cd | Cd |
| | Melting point of Solder Material [°C] | 218 | 218 | 218 | 218 | 218 | 218 | 218 | 218 |
| Evaluation of Heat Shrinkable Connecting Component | Sealing Ability of Heat Shrinkable Connecting Component | C | B | B | A | A | B | B | C |

As shown in Table 4, in the heat shrinkable connecting components No. 28 to No. 33, the transmittances of infrared light at wavelength of 1 µm in the sealing materials are 1.0% to 30.0%., and thus good results were obtained in the sealing ability of the heat shrinkable connecting components. On the other hand, in No. 27 in which the transmittance of infrared light in the sealing material was less than 1.0%, heating with infrared light proceeded rapidly, and thus the sealing material was rapidly softened, and the sealing property of the solder material was lowered, and as a result, the sealing ability of the heat shrinkable connecting component was slightly lowered. In No. 34 in which the transmittance of infrared light in the sealing material was more than 30.0%, the heating of the sealing material was delayed, and thus the softening was less likely to proceed. As a result, the sealing ability of the heat shrinkable connecting component was slightly deteriorated.

### <Test Example 5>

First, heat shrinkable tubes No. 35 to No. 42 were produced in the same manner as in No. 14 of Test Example 2. Next, one or more of THV, PVDF, FKM, EVA, LLDPE, and HDPE were mixed and used as the sealing material, and two or more of Sn, Ag, Sb, Pb, Bi, and In were mixed and used as the solder material, so that the softening point of the sealing material of the heat shrinkable connecting component and the melting point of the solder material had the values shown in Table 5. The softening points of the sealing materials and the melting points of the solder materials in the heat shrinkable connecting components No. 35 to No. 42 are shown in Table 5. The sealing ability of the heat shrinkable connecting component was evaluated in the same manner as in Test Example 1, and the results are shown in Table 5. The sealing materials all had a shear viscosity of 1000 Pa·s to 2000 Pa·s at 250°C with a shear rate of 100/s, and a shear viscosity of 7000 Pa s to 70000 Pa·s at 215°C with a shear rate of 0.01/s.

**Table 5**

| Test No. | | 35 | 36 | 37 | 38 | 39 | 40 | 41 | 42 |
|---|---|---|---|---|---|---|---|---|---|
| Main Component Resin of Heat Shrinkable Tube | Composition | ETFE | ETFE | ETFE | ETFE | ETFE | ETFE | ETFE | ETFE |
| | Fluorine Content [% by mass] | 60 | 60 | 60 | 60 | 60 | 60 | 60 | 60 |
| Properties of Heat Shrinkable Tube | Melting Point of Tube [°C] | 225 | 225 | 225 | 225 | 225 | 225 | 225 | 225 |
| | Storage Modulus at 250°C to 280°C [MPa] | 0.8 | 0.8 | 0.8 | 0.8 | 0.8 | 0.8 | 0.8 | 0.8 |
| Properties of Sealing Material | Softening Point of Sealing Material [°C] | 90 | 90 | 100 | 110 | 140 | 150 | 160 | 160 |
| Properties of Solder Material | Melting point of Solder Material [°C] | 185 | 210 | 220 | 220 | 230 | 230 | 240 | 260 |
| Evaluation of Heat Shrinkable Connecting Component | Sealing Ability of Heat Shrinkable Connecting Component | C | B | B | A | A | B | B | C |

As shown in Table 5, the heat shrinkable connecting components No. 36 to No. 41, in which the melting points of the solder materials were 210°C to 240°C and the softening points of the sealing materials were 90°C to 170°C, obtained good results in the leakage current test. On the other hand, the results showed that the sealing ability of the heat shrinkable connecting component was slightly decreased in No. 35 in which the melting point of the solder material was lower than 210°C and No. 42 in which the melting point of the solder material was higher than 240°C.

### <Test Example 6>

Heat shrinkable tubes No. 43 to No. 50 were produced in the same manner as in No. 16 of Test Example 2, except that the raw materials of the ethylene-tetrafluoroethylene copolymer were selected so that the fluorine content in the ethylene-tetrafluoroethylene copolymer became the value shown in Table 6, the temperature and the draw-down ratio during extrusion were controlled so that the arithmetic average roughness Ra of the surface of the obtained heat shrinkable tube became the value shown in Table 6, and crosslinking was performed by electron beam irradiation under the condition of an irradiation amount of 80 kGy. Further, heat shrinkable connecting components were produced by the same steps as in Test Example 1. The solder materials and the sealing materials used were the same as those used in No. 6 of Test Example 1. Table 5 shows the evaluation results of the arithmetic average roughness Ra and the heating efficiency with infrared light of the heat shrinkable tubes No. 43 to No. 50, and the visibility of the inside of the heat shrinkable tube. The arithmetic average roughness Ra of the heat shrinkable tube was measured by a stylus type roughness meter.

The heating efficiency of the heat shrinkable tube by infrared light and the visibility of the inside of the heat shrinkable tube were evaluated according to the following criteria. The evaluation results are shown in Table 5.
(1) Heating efficiency of heat shrinkable tube by infrared light
   A: The shrinkage time of the heat shrinkable connecting component is less than 20 seconds, and particularly excellent.
   B: The shrinkage time of the heat shrinkable connecting component is less than 25 seconds.
   C: The shrinkage time of the heat shrinkable connecting component is less than 35 seconds.
   D: The shrinkage time of the heat shrinkable connecting component is 35 seconds or more.
(2) Visibility of inside of heat shrinkable tube
   A: The ease of checking the state of impregnation of the solder material into the electrical wire, the melting of the sealing material, and the state of covering the electrical wire is particularly excellent.
   B: The state of impregnation of the solder material into the electrical wire, the melting of the sealing material, and the state of covering the electrical wire can be checked.
   C: The state of impregnation of the solder material into the electrical wire and the progress of melting of the sealing material can be checked.
   D: The state of impregnation of the solder material into the electrical wire and the progress of melting of the sealing material cannot be checked.

**Table 6**

| Test No. | | 43 | 44 | 45 | 46 | 47 | 48 | 49 | 50 |
|---|---|---|---|---|---|---|---|---|---|
| Main Component Resin of Heat Shrinkable Tube | Composition | ETFE | ETFE | ETFE | ETFE | ETFE | ETFE | ETFE | ETFE |
| | Fluorine Content [% by mass] | 61 | 61 | 61 | 61 | 61 | 61 | 61 | 61 |
| Properties of Heat Shrinkable Tube | Melting Point of Tube [°C] | 220 | 220 | 220 | 220 | 220 | 220 | 220 | 220 |
| | Storage Modulus at 250°C to 280°C [MPa] | 1.2 | 1.2 | 1.2 | 1.2 | 1.2 | 1.2 | 1.2 | 1.2 |
| | Arithmetic Average Roughness Ra of Surface [µm] | 0.05 | 0.10 | 0.30 | 0.50 | 1.00 | 1.50 | 2.00 | 3.00 |
| Properties of Sealing Material | Composition of Sealing Material | THV | THV | THV | THV | THV | THV | THV | THV |
| | Softening Point of Sealing Material [°C] | 110 | 110 | 110 | 110 | 110 | 110 | 110 | 110 |
| Properties of Solder Material | Composition of Solder Material | Sn | Sn | Sn | Sn | Sn | Sn | Sn | Sn |
| | | Ag | Ag | Ag | Ag | Ag | Ag | Ag | Ag |
| | | Cu | Cu | Cu | Cu | Cu | Cu | Cu | Cu |
| | Melting point of Solder Material [°C] | 223 | 223 | 223 | 223 | 223 | 223 | 223 | 223 |
| Evaluation of Heat Shrinkable Connecting Component | Heating Efficiency of Tube | C | B | B | A | A | A | A | A |
| | Visibility of Tube | A | A | A | A | A | B | B | C |

As shown in Table 6, the heat shrinkable connecting components No. 44 to No. 49 in which the arithmetic average roughness Ra of the surface of each tube was 0.10 µm to 2.00 µm obtained good results, and both the heating efficiency when heated by the infrared light heating device and the visibility of the inside when the heat shrinkable connecting components were used could be achieved. On the other hand, in No. 43 having an arithmetic average roughness Ra of less than 0.10 µm, and No. 50 having an arithmetic average roughness Ra of more than 2.00 µm, the heating efficiency when heated with an infrared light heating device or the visibility of the inside when heat shrinkable connecting components were used was slightly reduced.

### < Test Example 7>

Heat shrinkable connecting components No. 51 to No. 58 were produced using the heat shrinkable tubes of No. 14 to No. 19 of Test Example 2. First, a ring-shaped sealing portion was installed at an end portion in the longitudinal direction of the metal rod using a sealing material having a softening point of 110°C and including hydrotalcite having THV 70% by mass, FKM 30% by mass, and a content described in Table 7. Next, a heat shrinkable tube was placed around its outer periphery. Then, the sealing portion was fixed and disposed in place by the heat shrinkable tube being shrunk by applying hot air of 500°C with a heat gun. Then, the heat shrinkable tubes were taken out from the metal rods after cooling, thereby producing heat shrinkable connecting components No. 51 to No. 58. The tube was 30 mm long. The sealing material was made with a width of 2 mm and a thickness of 0.4 mm. The shear viscosity was adjusted by the amount of hydrotalcite added. The shear viscosities at 250°C and 215°C are shown in Table 7.

The sealing ability of the heat shrinkable connecting component was evaluated by the following procedure. First, a crimp sleeve and a heat shrinkable connecting component were placed in a portion of the ETFE electrical wire where the covering was removed, and the crimp sleeve portion was crimped and fixed by a crimping tool in a state where the crimp sleeve and the heat shrinkable connecting component were placed so that the tip of the lead wire was located in the removed portion. Thereafter, the heat shrinkable connecting component was heated and shrunk, and voltage was applied in a liquid to perform evaluation whether or not the leakage current was equal to or less than a threshold value. The crimp sleeve was a copper base plated with 8 µm thick nickel, and had a length of 15 mm. For evaluation of heat resistance, the electrical wire after shrinkage of the heat shrinkable connecting component was heated at 215°C for 750 hours, and then evaluation of leakage current was performed. The immersion liquid was 5% NaCl, 0.5% surfactant, and the voltage of the 1 kV was applied for 60 seconds to evaluate the leakage current. The evaluation results of the sealing ability of the heat shrinkable connecting components are shown in Table 7. The evaluation criteria of the sealing ability of the heat shrinkable connecting component are as follows.
A: The pass rate of the leakage current test is 90% or more.
B: The pass rate of the leakage current test is 80% or more.
C: The pass rate of the leakage current test is 70% or more.
D: The pass rate of the leakage current test is less than 70%.

**Table 7**

| Test No. | | 51 | 52 | 53 | 54 | 55 | 56 | 57 | 58 |
|---|---|---|---|---|---|---|---|---|---|
| Main Component Resin of Heat Shrinkable Tube | Composition | ETFE | ETFE | ETFE | ETFE | ETFE | ETFE | ETFE | ETFE |
| Main Component of Heat Shrinkable Tube | Melting Point of Tube [°C] | 225 | 225 | 225 | 225 | 225 | 225 | 225 | 225 |
| | Storage Modulus at 250°C to 280°C [MPa] | 0.8 | 1.0 | 1.2 | 1.6 | 2.0 | 2.8 | 1.0 | 1.0 |
| Properties of Sealing Material | Composition of Sealing Material | THV | THV | THV | THV | THV | THV | THV | THV |
| | | FKM | FKM | FKM | FKM | FKM | FKM | FKM | FKM |
| | Amount of Hydrotalcite Added | 1.5 | 1.5 | 1.5 | 1.5 | 1.5 | 1.5 | 0.8 | 3.5 |
| | Shear Viscosity of Sealing Material [Pa·s] Temperature 250°C, Shear Rate 100/s | 1200 | 1200 | 1200 | 1200 | 1200 | 1200 | 1000 | 2000 |
| | Shear Viscosity of Sealing Material [Pa·s] Temperature 215°C, Shear Rate 0.01/s | 13000 | 13000 | 13000 | 13000 | 13000 | 13000 | 7000 | 70000 |
| Properties of Crimp Sleeve | Material of Crimp Sleeve | Cu | Cu | Cu | Cu | Cu | Cu | Cu | Cu |
| | Surface Treatment of Crimp Sleeve | Ni plating | Ni plating | Ni plating | Ni plating | Ni plating | Ni plating | Ni plating | Ni plating |
| Evaluation of Heat Shrinkable Connecting Component | Sealing Ability of Heat Shrinkable Connecting Component | B | B | A | A | B | B | C | C |

As shown in Table 7, even when the crimp sleeves were used as the connection portions, the heat shrinkable connecting components No. 51 to No. 58, each in which the storage modulus of the heat shrinkable tube at 250°C to 280°C was 0.8 MPa to 2.8 MPa, the shear viscosity of the sealing material at 250°C with a shear rate of 100/s was 1000 Pa·s to 2000 Pa·s, and the shear viscosity of the sealing material at 215°C with a shear rate of 0.01/s was 7000 Pa·s to 70000 Pa·s, had sufficient sealing ability.

The above results show that the heat shrinkable connecting components are excellent in sealing ability and durability under a high temperature environment.

### REFERENCE SIGNS LIST

1 heat shrinkable tube
2 connection portion
3 sealing portion
5 conductor connecting portion
6, 16 conductor
7, 17, 24 insulating layer
8, 18 insulated electrical wire
11 heat shrinkable tube after shrinkage
12 connection portion after melting
13 sealing portion after melting
23 element wire
25 grounding insulated wire
27 solder braid
28 crimp sleeve
40, 50, 51, 53, 54 heat shrinkable connecting component
100 electrical wire bundle after connection

## Claims

1. A heat shrinkable connecting component for connection of an insulated electrical wire including a conductor covered by an insulating layer, the heat shrinkable connecting component comprising:
a heat shrinkable tube having a melting point of 210°C to 250°C; and
a pair of sealing portions disposed at inner peripheral surfaces of the heat shrinkable tube at two end portions of the heat shrinkable tube,
wherein a sealing material of each of the sealing portions has shear viscosity of 1000 Pa·s to 2000 Pa·s at 250°C with a shear rate of 100/s and has shear viscosity of 7000 Pa·s to 70000 Pa·s at 215°C with a shear rate of 0.01/s.

2. The heat shrinkable connecting component according to claim 1,
wherein a main component of the heat shrinkable tube is an ethylene-tetrafluoroethylene copolymer, and
wherein the heat shrinkable tube has a storage modulus of 0.8 MPa to 2.8 MPa at 250°C to 280°C.

3. The heat shrinkable connecting component according to claim 1 or claim 2,
wherein the sealing material has a softening point of 90°C to 170°C.

4. The heat shrinkable connecting component according to claim 1, claim 2, or claim 3,
wherein a main component of the sealing material is a tetrafluoroethylene-hexafluoropropylene-vinylidenefluoride copolymer.

5. The heat shrinkable connecting component according to any one of claim 1 to claim 4,
wherein the sealing material contains an inorganic filler,
wherein the inorganic filler is silica, hydrotalcite, clay, or a combination thereof, and
wherein a content of the inorganic filler is 1.0 part by mass to 4.0 parts by mass with respect to 100 parts by mass of a resin in the sealing material.

6. The heat shrinkable connecting component according to any one of claim 1 to claim 5,
wherein transmittance of infrared light having a wavelength of 1 µm in the sealing material is 1.0% to 30.0%.

7. The heat shrinkable connecting component according to any one of claim 1 to claim 6, further comprising:
a connection portion disposed at an inner peripheral surface of the heat shrinkable tube between the pair of sealing portions,
wherein a solder material of the connection portion has a melting point of 210°C to 240°C.

8. The heat shrinkable connecting component according to any one of claim 1 to claim 7,
wherein arithmetic average roughness Ra of a surface of a heat shrinkable tube is 0.10 µm to 2.00 µm.

9. A method of manufacturing a heat shrinkable connecting component, the method comprising:
disposing a pair of sealing portions at inner peripheral surfaces of a heat shrinkable tube at two end portions of the heat shrinkable tube,
wherein the disposing the sealing portions includes shrinking the heat shrinkable tube and fixing the sealing portions in place,
wherein the heat shrinkable tube has a melting point of 210°C to 250°C, and
wherein a sealing material of each of the sealing portions has shear viscosity of 1000 Pa·s to 2000 Pa·s at 250°C with a shear rate of 100/s and has shear viscosity of 7000 Pa·s to 70000 Pa·s at 215°C with a shear rate of 0.01/s.

10. The method of manufacturing a heat shrinkable connecting component according to claim 9,
wherein the sealing material has a softening point of 90°C to 170°C.
